# EUROPÄISCHE PATENTSCHRIFT

(11) **EP 2 055 680 B1**
(45) Veröffentlichungstag und Bekanntmachung des Hinweises auf die Patenterteilung: **22.12.2010**
(21) Anmeldenummer: 08018989.7
(22) Anmeldetag: 30.10.2008
(51) Int. Cl.: C02F 1/78

(54) **Anlage zur Reinigung von Wasser**
Plant to clean water
Installation destinée au nettoyage d'eau

(30) Priorität: 30.10.2007 DE 202007015082 U
(43) Veröffentlichungstag der Anmeldung: 06.05.2009
(73) Patentinhaber: Koch, Peter, 7423 Pinkafeld (AT)
(72) Erfinder: Koch, Peter, 7423 Pinkafeld (AT)
(74) Vertreter: Kilchert, Jochen

(56) Entgegenhaltungen:
- DE-A1-102004 045 915
- US-A- 4 003 832
- US-A1- 2005 279 686

## Beschreibung

Die Erfindung betrifft eine Anlage zur Reinigung von Wasser gemäß dem Oberbegriff des Anspruchs 1. Eine derartige Anlage ist bereits aus der EP 1 598 316 A2 bekannt.

EP 1 598 316 A2 beschreibt eine Reinigungsvorrichtung für Wasser mit einer hydromechanischen Behandlungseinrichtung und einem der Behandlungseinrichtung nachgeordneten Filter. Bei der bekannten Vorrichtung wird verschmutztes Wasser in einen Absetzbehälter gepumpt, wo sich grobe Verunreinigungen aufgrund ihrer höheren Dichte gegenüber dem Wasser am Boden absetzen und somit vom Wasser getrennt werden. Das Wasser wird im weiteren Verlauf in eine Behandlungseinrichtung geleitet, die das Wasser hydromechanisch behandelt, wodurch durch mineralische oder biologische Bestandteile gebildete Verunreinigungen im Wesentlichen desintegriert bzw. zerstört werden, so dass eine Veränderung, insbesondere Verkleinerung, der Schmutzpartikel erreicht wird. Das Wasser wird weiter durch einen Filter geleitet, der die veränderten Schmutzpartikel zurückhält und das gereinigte Wasser über eine Zuleitung wieder dem Kreislauf zuführt.

Bekannte Filter sind im Allgemeinen als Mikro-, Ultra- oder Nanofilter bzw. Umkehrosmosefilter ausgeführt und haben nur begrenzte Standzeiten, bei denen der notwendige Durchfluss sichergestellt ist. Um diesen Effekten entgegen zu wirken, werden die Filter des Öfteren gespült bzw. es erfolgt eine Umschaltung auf andere Filtersätze. Dabei sind die Spülvorgänge ein wichtiger Indiz für die Wirtschaftlichkeit der gesamten Anlage, das heißt, die Menge an Frischwasser, die zum Spülen des Filters notwendig ist, muss im Hinblick auf die Wirtschaftlichkeit der Anlage geringer sein als die Menge an Wasser, die durch die Filteranlage selbst gereinigt wird.

Einen weiteren Nachteil stellt das so genannte Biofouling dar, das bei der Nanofiltration und der Umkehrosmose häufig auftritt, da die Membrane der dabei verwendeten Filter nicht mit Chlor desinfiziert werden können, um Bakterien abzutöten. Durch die Besiedelung des Filters mit Mikroorganismen bzw. Bakterien kommt es meist zu irreparablen Schäden an den Filteranlagen. Dabei hängt die Art der Mikroorganismen, deren Wachstumsrate und deren Konzentration auf der Membran hauptsächlich von der Temperatur, der Sonneneinstrahlung, dem PH-Wert, dem Vorhandensein von organischen und anorganischen Nährstoffen und insbesondere von der Konzentration an gelöstem Sauerstoff ab. Ein hohes Sauerstoffangebot ermöglicht eine starke Vermehrung der Mikroorganismen, so dass sich ein Biofilm auf den Filtermembranen entwickelt, wodurch der Eingangswasserstrom in die Membran behindert wird. Um dieselbe Wassermenge umzusetzen, muss daher der Druck erhöht werden, wobei einerseits die Betriebskosten der gesamten Anlage erhöht und andererseits irreparable Schäden an den Membranen verursacht werden.

Aus der Druckschrift DE 10 2004 045 915 A1 ist eine Vorrichtung zur Reinigung von Wasser in einem geschlossenen Behandlungskreislauf bekannt, der eine Rohrleitung umfasst, in der eine Verengung vorgesehen ist. In der Verengung wir eine Kavitation erzeugt, die desinfizierend auf das Wasser wirkt. Das desinfizierte Wasser wird anschließend durch einen Filter geleitet, in dem partikuläre Verunreinigungen abgetrennt werden. Der Nachteil bei der bekannten Vorrichtung besteht darin, dass der Filter in relativ kurzen Zeiträumen mit Verunreinigungen übersättigt wird und daher ein Austausch erforderlich ist.

Die Druckschrift US 4,003,832 beschreibt eine Anlage zur Reinigung von Wasser, die zwei Filter umfasst, die einer Ozonbehandlungseinheit vorgeordnet sind. Die Filter umfassen jeweils eine Zuleitung und eine Ableitung, wobei die Ableitung eine Verzweigung umfasst, die mit Ventilen ausgestattet ist. Durch geeignete Ventilstellung wird eine Rückspülung jeweils eines Filters erreicht. Bei der bekannten Vorrichtung erfordert die Rückspülung einen hohen Steuerungsaufwand der Stellventile in den Zu- bzw. Ableitungen des Filters.

Eine Ventilsteuerung für eine Anlage zur chemischen Reinigung von Wasser ist aus der Druckschrift D3 bekannt. Die bekannte Steuerung ermöglicht den Zustrom des zu reinigenden Wassers an unterschiedliche Filtereinrichtungen.

Es ist Aufgabe der Erfindung, eine Anlage zur Reinigung von Wasser anzugeben, die insbesondere durch die Vermeidung des Biofoulings wirtschaftlich und wartungsarm betrieben werden kann.

Diese Aufgabe wird erfindungsgemäß durch eine Anlage gemäß dem Gegenstand des Anspruchs 1 gelöst.

Der Erfindung liegt demnach der Gedanke zu Grunde, eine Anlage zur Reinigung von Wasser mit einer Filtereinheit, der eine Behandlungseinheit vorgeordnet ist, anzugeben, wobei die Behandlungseinheit zur Vorreinigung des Wassers angepasst ist. Die Behandlungseinheit umfasst dabei einen geschlossenen Kreislauf mit einem Reaktionsbehälter und einem Ozonisator, der dem Reaktionsbehälter nachgeordnet ist, sowie wenigstens einen Kavitator, der dem Ozonisator nachgeordnet ist, wobei der Reaktionsbehälter mit wenigstens zwei Zuläufen der Filtereinheit gekoppelt und die Wasserzufuhr zur Filtereinheit zwischen den Zuläufen umschaltbar ist derart, dass die Filtereinheit in verschiedenen, insbesondere entgegengesetzten, Richtungen von Wasser durchströmbar ist.

Die Erfindung weist mehrere Vorteile auf, da einerseits eine Vorreinigung des verschmutzten Wassers und andererseits eine Desinfektion der verwendeten Filtereinheit erreicht wird. Zur Behandlung des Wassers wird in der Behandlungseinheit dem Wasser Ozon zugesetzt, wodurch biologische Verunreinigungen bzw. flüchtige organische Verbindungen (VOC, Volatile Organic Compounds) reduziert werden. Auf diese Weise werden Biofilme, Huminsäuren, Viren, Bakterien, VOC-Lasten oder andere biologische Verunreinigungen im Wesentlichen vollständig eliminiert. Im Rahmen der Vorreinigung des Wassers wird dadurch erreicht, dass organische Verbindungen, die zum Biofouling an der Filtereinheit führen können, bereits vor der Zuführung zur Filtereinheit stark reduziert werden. Die erfindungsgemäße Anlage ermöglicht ferner, dass der Filtereinheit mit Ozon angereichertes Wasser zur Desinfektion zugeführt werden kann, indem die Zuläufe zur Filtereinheit derart ausgebildet sind, dass die Wasserzufuhr zur Filtereinheit umschaltbar ist, wodurch die Filtereinheit in verschiedenen, insbesondere entgegengesetzten, Richtungen mit ozonangereichertem Wasser durchströmbar ist. Dabei ermöglicht das Ozon eine Minimierung der biologischen Verschmutzungen an der Filtereinheit, so dass die Standzeit des Filters erhöht wird. Insgesamt kann die erfindungsgemäße Anlage wirtschaftlicher betrieben werden, da durch Vermeidung des Biofoulings der Wasserdurchsatz in der Filtereinheit im Wesentlichen konstant bleibt.

Grundsätzlich ist der Betrieb der erfindungsgemäßen Anlage nicht auf die Verwendung von Wasser beschränkt. Selbstverständlich ist die Anlage ebenfalls dazu geeignet, andere flüssige Medien zu reinigen bzw. allgemein als Prozessmittel zu nutzen.

Erfindungsgemäß ist den Zuläufen der Filtereinheit jeweils ein Ablauf zugeordnet. Vorzugsweise sind die

Abläufe der Filtereinheit den Zuläufen der Filtereinheit im Wesentlichen gegenüber liegend angeordnet. Auf diese Weise wird erreicht, dass das Wasser die Filtereinheit je nach Schaltzustand der Wasserzufuhrumschaltung in einer im Wesentlichen gleichen Richtung und vollständig durchströmt.

Ferner kann wenigstens einer der Abläufe der Filtereinheit eine Rückspülleitung umfassen, die mit dem geschlossenen Kreislauf der Behandlungseinheit gekoppelt ist. Die Rückspülleitung ermöglicht es, dass mit Ozon angereichertes Wasser, das zur Desinfektion der Filtereinheit genutzt wird, wieder dem geschlossenen Kreislauf der Behandlungseinheit zugeführt wird.

Die Kopplung der Rückspülleitung mit dem geschlossenen Kreislauf kann dem Ozonisator in Strömungsrichtung vorgeordnet sein. Auf diese Weise kann das gereinigte Wasser mit Ozon angereichert werden, so dass eine effektivere Vorreinigung des Schmutzwassers mit dem ozonangereicherten, gereinigten Wasser erreicht wird.

Des Weiteren kann die Rückspülleitung mit einem freien Ablauf verbunden sein, so dass insbesondere das ozonangereicherte Wasser, dass zur Desinfektion des Filters genutzt wird, nach dem Desinfektionsvorgang aus der Anlage entfernt wird.

Vorzugsweise weist die Rückspülleitung einen selbstreinigenden Feinstfilter auf. Auf diese Weise werden Schmutzpartikel, die das zur Desinfektion genutzte Wasser aus dem Filter ausgespült hat, aus dem Wasser entfernt, so dass dem geschlossenen Kreislauf der Behandlungseinheit im Wesentlichen gereinigtes Wasser zugeführt wird.

Bei einer bevorzugten Ausführungsform der erfindungsgemäßen Anlage umfasst wenigstens einer der Abläufe der Filtereinheit einen Reinwasserablauf, der mit wenigstens einem Schmutzwasserzulauf des Reaktionsbehälters gekoppelt ist. Auf diese Weise wird der Wasserreinigungskreislauf geschlossen, so dass die der Anlage zugeführte Menge an verschmutztem Wasser durch die entsprechende Menge an gereinigtem Wasser ersetzt wird.

Vorzugsweise weisen die Zuläufe der Filtereinheit jeweils eine Vorrichtung zur Ozonzerstörung auf. Auf diese Weise kann dem im Reaktionsbehälter durch Ozon vorgereinigten Schmutzwasser vor der Zufuhr zur Filtereinheit das Ozon wieder entzogen werden. Das zu reinigende Wasser kann somit nach dem Durchlaufen der Filtereinheit die Anlage als ozonunbelastetes, gereinigtes Wasser verlassen.

Besonders vorteilhaft ist es, wenn die Zuläufe und Abläufe der Filtereinheit jeweils ein Ventil aufweisen, das mit einer Steuereinheit verbunden ist derart, dass die Strömungsrichtung des Wassers in der Filtereinheit veränderbar ist. Die Ventile ermöglichen es, einfach und schnell zwischen dem Filtrierbetriebszustand und dem Desinfektionsbetriebszustand der Filtereinheit umzuschalten, da die Desinfektion der Filtereinheit mit ozonangereichertem Wasser erfolgt, das in einer anderen Richtung als das zu reinigende Schmutzwasser den Filter durchströmt. Eine Reinigung des Schmutzwassers und eine Desinfektion der Filtereinheit ist allerdings nicht zeitgleich vorgesehen, so dass während der Desinfektion der Filtereinheit keine Reinigung von verschmutztem Wasser erfolgt.

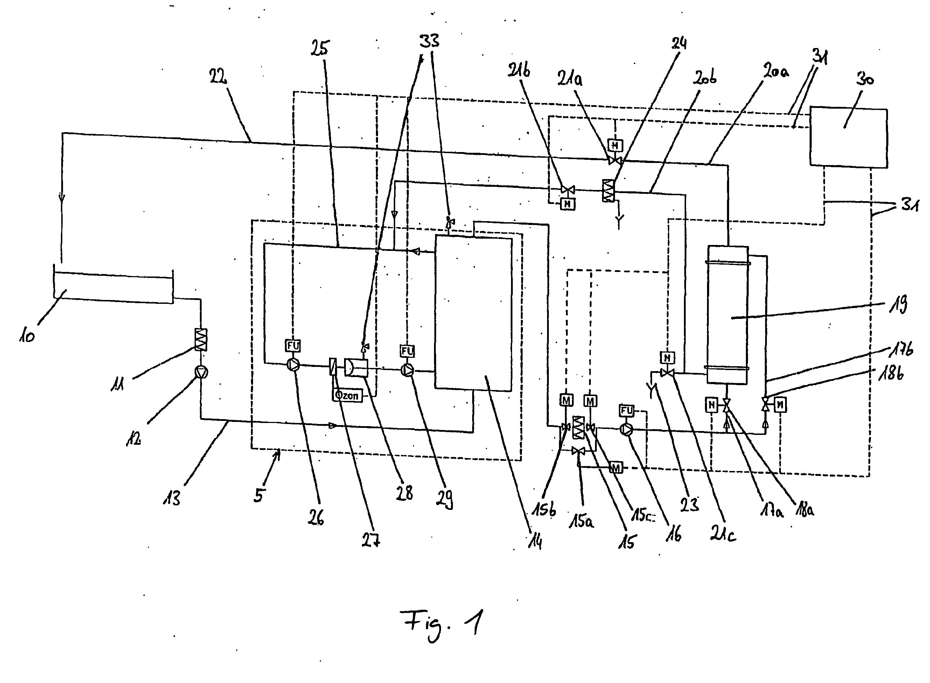

Die Erfindung wird im Folgenden anhand eines Ausführungsbeispiels unter Bezug auf die beigefügte schematische Zeichnung näher erläutert. Darin zeigt die einzige Figur ein Prozessschaltbild einer erfindungsgemäßen Anlage.

Das Prozessschaltbild gemäß der einzigen Figur zeigt eine erfindungsgemäße Anlage mit einer Behandlungseinheit 5 und einer Filtereinheit 19, wobei die Filtereinheit 19 der Behandlungseinheit 5 nachgeordnet ist. Ferner umfasst die Anlage ein Schmutzwasserbecken 10, das der Behandlungseinheit 15 vorgeordnet und der Filtereinheit 19 nachgeordnet ist, so dass sich ein Wasserkreislauf bildet. Dem Schmutzwasserbecken 10 ist in Strömungsrichtung des Schmutzwassers ein Grobfilter 11 nachgeordnet, der einer Schmutzwasserpumpe 12 unmittelbar vorgeordnet ist. Die Schmutzwasserpumpe 12 fördert das Schmutzwasser weiter über den Schmutzwasserzulauf 13 zum Reaktionstank 14. Der Reaktionstank 14 ist Bestandteil der Behandlungseinheit 5, deren Aufbau im nächsten Absatz erläutert wird. Das zu reinigende Wasser strömt vom Reaktionstank 14 zu einer Vorrichtung zur Ozonzerstörung 15, wobei das Wasser die Vorrichtung zur Ozonzerstörung 15 nicht zwingend durchlaufen muss, sondern bei Bedarf auch über einen Bypass 15d die Vorrichtung zur Ozonzerstörung 15 umgehen kann, wenn das Bypassventil 15a geöffnet und die Sperrventile 15b, 15c geschlossen sind. Dem Bypass 15d bzw. der Vorrichtung zur Ozonzerstörung 15 ist eine Filterversorgungspumpe 16 nachgeordnet, die das zu reinigende Wasser zwei Zuläufen 17a, 17b zuführt, die jeweils ein Zulaufventil 18a, 18b aufweisen, so dass das Wasser der Filtereinheit 19 an entgegengesetzten Enden zugeführt werden kann. Die Filtereinheit 19 ist mit zwei Abläufen 20a, 20b gekoppelt, wobei der erste Ablauf 20a ein Ablaufventil 21a aufweist und in Strömungsrichtung mit dem Reinwasserablauf 22 gekoppelt ist, der das gereinigte Wasser zurück in das Schmutzwasserbecken 10 leitet. Der zweite Ablauf 20b der Filtereinheit 19 ist mit einer Rückspülleitung 34 gekoppelt, die einen Feinstfilter 24 aufweist, der einem Ablaufventil 21b vorgeordnet ist, und mit der Behandlungseinheit 5 verbunden ist. Ferner ist der zweite Ablauf 20b mit einem freien Ablauf 23 gekoppelt, so dass das durch den zweiten Ablauf 20b strömende Wasser aus der Anlage abgeleitet werden kann, wenn ein weiteres Ablaufventil 21c geöffnet ist.

Die Behandlungseinheit 5 weist neben dem Reaktionstank 14 ferner einen geschlossenen Kreislauf 25 auf, wobei der Reaktionstank 14 einen Teil des geschlossenen Kreislaufs 25 darstellt. In Richtung der Strömung im geschlossenen Kreislauf 25 ist dem Reaktionstank 14 eine Kreislaufpumpe 26 nachgeordnet, die das im geschlossenen Kreislauf 25 umlaufende Wasser zu einem Ozonisator 27 leitet, dem ein Kavitator 28 nachgeordnet ist. Dem Kavitator 28 ist eine Reaktionstankpumpe 29 nachgeordnet, die das Wasser wieder dem Reaktionstank 14 zuführt. Der Kavitator 28 sowie der Reaktionstank 14 weisen jeweils eine Entlüftungsvorrichtung 33 auf.

Des Weiteren verfügt die Anlage gemäß der einzigen Figur über eine Steuereinheit 30, die mit Steuerleitungen 31 mit allen Pumpen, Ventilen und dem Ozonisator 27 gekoppelt ist.

Beim Betrieb der Anlage wird das verschmutzte Wasser aus dem Schmutzwasserbecken 10 zunächst durch einen Grobfilter 11 gepumpt, wobei es bereits von starken Verschmutzungen befreit wird. Zum Transport des verschmutzten Wassers im Schmutzwasserzulauf 13 ist die Schmutzwasserpumpe 12 vorgesehen, die das verschmutzte Wasser zum Reaktionstank 14 fördert. In der Behandlungseinheit 5 wird das zu behandelnde Wasser durch den geschlossenen Kreislauf 25 gepumpt, wobei dieser Vorgang vorzugsweise mehrmals wiederholt wird, um eine effiziente Reinigungswirkung zu erzielen. Dabei wird das zu reinigende Wasser im Reaktionstank 14 solange zwischengespeichert, bis das Wasser den geschlossenen Kreislauf 25 mehrmals, vorzugsweise drei bis vier Mal, durchströmt und vom Kavitator 28 behandelt wurde. Der Pumpvorgang durch den geschlossenen Kreislauf 25 wird durch die Kreislaufpumpe 26 und die Reaktionstankpumpe 29 bewerkstelligt. Dabei strömt das zu reinigende Wasser zunächst durch den Ozonisator 27, wo dem Wasser Ozon zugeführt wird. Das Ozon kann dabei aus externen Ozongeneratoren, aus der Luft oder auch durch eine Ozonelektrode direkt im Wasser erzeugt werden. Nach der Ozonbehandlung wird das Wasser zum Kavitator 28 geleitet, in dem eine hydromechanische Behandlung des Wassers erfolgt, wodurch es zu einer Zerstörung von mineralischen und biologischen Bestandteilen kommt. Ferner werden auch physikalische Eigenschaften des Wassers, insbesondere die Viskosität und die Oberflächenspannung, im Kavitator 28 insofern verändert, dass die Viskosität erhöht und die Oberflächenspannung vermindert wird. Die entsprechend veränderten bzw. verkleinerten Partikel der Bestandteile, die die Verunreinigung bilden, können nun durch die Filtereinheit 19 aus dem Wasser entfernt werden. Dabei umfasst die Filtereinheit 19 vorzugsweise einen Membranfilter, der als Mikrofilter, Ultrafilter, Nanofilter bzw. als Reverseosmosefilter ausgeführt sein kann. Das in der Kavitationseinheit 28 behandelte Wasser wird zunächst wieder in den Reaktionstank 14 geleitet, der einen Wasserspeicher darstellt, so dass das dem Wasser zugesetzte Ozon eine Reaktion mit den organischen Verschmutzungsbestandteilen eingeht, wodurch diese eliminiert werden. Das weiterhin mit Ozon angereicherte Wasser wird im Folgenden mit Hilfe der Filterversorgungspumpe 16 zur Vorrichtung zur Ozonzerstörung 15 geleitet, wo dem Wasser das Ozon wieder entzogen wird. Das nun im Wesentlichen ozonfreie Wasser strömt über den Zulauf 17a in die Filtereinheit 19. Dabei ist das Zulaufventil 18b des zweiten Zulaufs 17b geschlossen, während das Zulaufventil 18a des ersten Zulaufs 17a geöffnet ist. Das Wasser durchströmt den Membranfilter in der Filtereinheit 19 und wird dabei von den Verschmutzungspartikeln weitgehend befreit. Das gereinigte Wasser wird über den Ablauf 20a zum Reinwasserablauf 22 geleitet, wobei das Ablaufventil 21a des ersten Ablaufs 20a geöffnet ist, während die Ablaufventile 21b, 21c, die dem zweiten Ablauf 20b nachgeordnet sind, geschlossen sind. Das gereinigte Wasser gelangt wieder in das Schmutzwasserbecken 10, so dass der Schmutzwasserkreislauf geschlossen wird, wodurch erreicht wird, dass das Wasser aus dem Schmutzwasserbecken 10 einer kontinuierlichen Reinigung zuführbar ist.

Für die Reinigung bzw. Desinfektion der Filtereinheit 19 wird das ozonangereicherte Wasser aus dem Reaktionstank 14 nicht durch die Vorrichtung zur Ozonzerstörung 15 geleitet, sondern umgeht die Vorrichtung zur Ozonzerstörung 15, indem das Wasser durch einen Bypass 15d strömt, wobei das Bypassventil 15a selbstverständlich geöffnet und die Sperrventile 15b, 15c geschlossen sind. Die Sperrventile 15b, 15c sperren die Vorrichtung zur Ozonerzeugung 15 ab, so dass das Wasser über den Bypass 15d geleitet wird, wobei das Sperrventil 15b im geschlossenen Zustand ein Zuströmen des Wassers vor der Vorrichtung zur Ozonzerstörung 15 verhindert, während das Sperrventil 15c eine Wasserzufuhr sperren kann, die durch einen Rückstrom filterseitig in die Einrichtung zur Ozonzerstörung 15 eindringen kann. Die geöffneten Sperrventile 15b, 15c ermöglichen in Verbindung mit einem geschlossenen Bypassventil 15a auch einen Betrieb der erfindungsgemäßen Anlage mit Filtern, die nicht ozonbeständig sind, indem den Filtern Wasser zugeführt wird, das von Ozon befreit wurde. Im weiteren Verlauf gelangt das ozonangereicherte Wasser zum zweiten Zulauf 17b der Filtereinheit 19 und wird der Filtereinheit 19 in der Nähe des ersten Ablaufs 20a zugeführt. Um dies zu erreichen, ist das erste Zulaufventil 18a geschlossen, während das zweite Zulaufventil 18b geöffnet ist. Das ozonangereicherte Wasser durchströmt die Filtereinheit 19, insbesondere den Membranfilter, entgegengesetzt zur Strömungsrichtung während des Schmutzwasserreinigungsbetriebes, so dass das ozonangereicherte Wasser zum zweiten Ablauf 20b geleitet wird, der in der Nähe des ersten Zulaufs 17a angeordnet ist. Der zweite Ablauf 20b teilt sich in einen freien Ablauf 23 und eine Rückspülleitung 34 auf. Die Zufuhr des für die Reinigung der Filtereinheit 19 genutzten Wassers zu einer der beiden Zweigleitungen ist über die Steuerung der beiden Ablaufventile 28b, 21c möglich. Wenn das Ablaufventil 21b geöffnet ist, fließt das mit Ozon angereicherte Wasser über die Rückspülleitung 34 zu einem Feinstfilter 24, der feinste Partikel vorzugsweise in der Größenordnung um 0,2 µm entfernt, und weiter wieder in den geschlossenen Kreislauf 25 der Behandlungseinheit 5. Wenn das Ablaufventil 21b geschlossen und das Ablaufventil 21c geöffnet ist, wird das Wasser aus dem zweiten Ablauf 20b zum freien Ablauf 23 geleitet und somit aus der Anlage abgeführt, beispielsweise in eine Kanalisation.

Um einen gleichbleibend hohen Durchfluss des zu reinigenden Wassers durch die Filtereinheit 19 zu erreichen, wird die Viskosität und die Oberflächenspannung des zu reinigenden Wassers mit Hilfe der hydrodynamischen Kavitationseinheit 28 verändert. Dabei kann der Reinigungsvorgang verbessert werden, indem das zu reinigende Wasser die Kavitationseinheit 28 mehrfach durchläuft. Alternativ können auch mehrere, insbesondere drei, Kavitationseinheiten 28 in Reihe geschaltet sein, so dass das zu reinigende Wasser alle Kavitationseinheiten 28 durchströmt. Durch die Zusetzung von Ozon in das zu reinigende Wasser vor der Kavitationseinheit 28 werden nicht nur biologische Verschmutzungen aus dem Wasser entfernt, sondern auch Oxidationsmittel und Wasser homogenisiert, wodurch die Reinigungswirkung weiter verbessert und zugleich die Standzeit der Filtereinheit 19 erhöht wird.

Durch das Hinzusetzen von Ozon können nicht nur Biofilme, Huminsäuren, Viren, Bakterien oder VOC eliminiert werden, sondern beispielsweise auch ölhaltige Abwässer von Restöl befreit werden, wobei auf aufwändige Öltrennungsverfahren verzichtet werden kann. Ebenso ist es möglich, die Anlage zur Behandlung von Brachwasser von Schiffen, zur Minenwasseraufbereitung oder bei Gasexplorationen eingesetzt werden. Insbesondere bei Gasexplorationen kann eine höhere und wirtschaftlichere Ausbeute der Öl- und Gasreserven aufgrund der veränderten Oberflächenspannung und Viskosität erreicht werden, da auf diese Weise ein tieferes Eindringen in die Gesteinsmassen und somit ein höherer Austrieb aus dem Gestein erreicht wird. Über die Entlüftungsvorrichtungen 33 kann das ausgetriebene Ozon- /Gasgemisch entlüftet werden und der Umgebungsluft zugeführt werden. Ferner eignet sich die Anlage für die Schwimmbadwasseraufbereitung.

Bei der Reinigung der Filtereinheit 19 kann das Wasser ferner durch den Kavitator 28 entgast werden, so dass der Sauerstoffgehalt des Wassers reduziert wird. Das freigesetzte Gas wird über die Entlüftungsvorrichtung 33 an die Umgebung abgegeben. Nach der Entgasung wird die Filtereinheit 19 mit dem dynamisierten und molekularstrukturveränderten Wasser gespült. Durch die veränderten Oberflächenspannungen und Viskositäten werden rasche und verbesserte Ausspülungen in der Filtereinheit 19 erreicht und somit die Effizienz der Desinfektion erhöht. Zusätzlich wird über den Ozongenerator 27 eine ausreichende Menge an Ozon zugeführt, so dass das Ozon mit Verunreinigungsrückständen in der Filtereinheit 19 eine Reaktion eingehen kann, wodurch organische Verunreinigungen eliminiert werden. Dabei kann es vorteilhaft sein, eine Konzentration von wenigstens 4 ppm des Ozons im Wasser einzustellen.

### Bezugszeichenliste

- 5: Behandlungseinheit
- 10: Schmutzwasserbecken
- 11: Grobfilter
- 12: Schmutzwasserpumpe
- 13: Schmutzwasserzulauf
- 14: Reaktionstank
- 15: Vorrichtung zur Ozonzerstörung
- 15a: Bypassventil
- 15b, 15c: Sperrventil
- 15d: Bypass
- 16: Filterversorgungspumpe
- 17a: erster Zulauf
- 17b: zweiter Zulauf
- 18a, 18b: Zulaufventil
- 19: Filtereinheit
- 20a: erster Ablauf
- 20b: zweiter Ablauf
- 21a, 21b, 21c: Ablaufventil
- 22: Reinwasserablauf
- 23: freier Ablauf
- 24: Feinstfilter
- 25: geschlossener Kreislauf
- 26: Kreislaufpumpe
- 27: Ozonisator
- 28: Kavitator
- 29: Reaktionstankpumpe
- 30: Steuereinheit
- 31: Steuerleitung
- 33: Entlüftungsvorrichtung
- 34: Rückspülleitung

## Patentansprüche

1. Anlage zur Reinigung von Wasser mit einer Filtereinheit (19), der eine Behandlungseinheit (5) vorgeordnet ist, wobei die Behandlungseinheit (5) zur Vorreinigung des Wassers angepasst ist und einen geschlossenen Kreislauf (25) mit einem Reaktionsbehälter (14) und einem Ozonisator (27), der dem Reaktionsbehälter (14) nachgeordnet ist, sowie wenigstens einem Kavitator (28), der dem Ozonisator (27) nachgeordnet ist, umfasst,
**dadurch gekennzeichnet, dass**
der Reaktionsbehälter (14) mit wenigstens zwei Zuläufen (17a, 17b) der Filtereinheit (19) gekoppelt und die Wasserzufuhr zur Filtereinheit (19) zwischen den Zuläufen (17a, 17b) umschaltbar ist derart, dass die Filtereinheit (19) in verschiedenen, insbesondere entgegengesetzten, Richtungen von Wasser durchströmbar ist, wobei den Zuläufen (17a, 17b) der Filtereinheit (19) jeweils ein Ablauf (20a, 20b) zugeordnet ist.

2. Anlage nach Anspruch 1, **dadurch gekennzeichnet, dass** die Abläufe (20a, 20b) der Filtereinheit (19) den Zuläufen (17a, 17b) der Filtereinheit (19) im Wesentlichen gegenüberliegend angeordnet sind.

3. Anlage nach Anspruch 1 oder 2, **dadurch gekennzeichnet, dass** wenigstens einer der Abläufe (20a, 20b) der Filtereinheit (19) eine Rückspülleitung (34) umfasst, die mit dem geschlossenen Kreislauf (25) der Behandlungseinheit (5) gekoppelt ist.

4. Anlage nach Anspruch 3, **dadurch gekennzeichnet, dass** die Kopplung der Rückspülleitung (34) mit dem, geschlossenen Kreislauf (25) dem Ozonisator (27) in Strömungsrichtung vorgeordnet ist.

5. Anlage nach Anspruch 3 oder 4, **dadurch gekennzeichnet, dass** die Rückspülleitung (34) mit einem freien Ablauf (23) verbunden ist.

6. Anlage nach wenigstens einem der Ansprüche 3 bis 5, **dadurch gekennzeichnet, dass** die Rückspülleitung (34) einen selbstreinigenden Feinstfilter (24) aufweist.

7. Anlage nach wenigstens einem der Ansprüche 1 bis 6, **dadurch gekennzeichnet, dass** wenigstens einer der Abläufe (20a, 20b) der Filtereinheit (19) einen Reinwasserablauf (22) umfasst, der mit wenigstens einem Schmutzwasserzulauf (13) des Reaktionsbehälters (14) gekoppelt ist.

8. Anlage nach wenigstens einem der Ansprüche 1 bis 7, **dadurch gekennzeichnet, dass** die Zuläufe (17a, 17b) der Filtereinheit (19) jeweils eine Vorrichtung zur Ozonzerstörung (15) aufweisen.

9. Anlage nach wenigstens einem der Ansprüche 1 bis 8, **dadurch gekennzeichnet, dass** die Zuläufe (17a, 17b) und Abläufe (20a, 20b) der Filtereinheit (19) jeweils ein Ventil aufweisen, das mit einer Steuereinheit (30) verbunden ist derart, dass die Strömungsrichtung des Wassers in der Filtereinheit (19) änderbar ist.

## Claims

1. An installation for purifiying water including a filter unit (19) which is preceded by a treatment unit (5), wherein said treatment unit (5) is adapted to preliminary purify the water, and includes a closed circuit (25) with a reaction container (14) and an ozonizer (27) downstream of said reaction container (14), as well as at least one cavitator (28) downstream of said ozonizer (27),
**characterized in that**
said reaction container (14) is coupled to at least two inlets (17a, 17b) of said filter unit (19) and said water supply is switchable to said filter unit (19) between said inlets (17a, 17b) such that said filter unit (19) can be passed by water in different, in particular opposite directions, wherein one outlet (20a, 20b) is respectively associated with said inlets (17a, 17b) of said filter unit (19).

2. The installation according to claim 1, **characterized in that** said outlets (20a, 20b) of said filter unit (19) are disposed substantially opposing said inlets (17a, 17b) of said filter unit (19).

3. The installation according to claim 1 or 2, **characterized in that** at least one of said outlets (20a, 20b) of said filter unit (19) includes a backwashing line (34) coupled to said closed circuit (25) of said treatment unit (5).

4. The installation according to claim 3, **characterized in that** the coupling of said backwashing line (34) to said closed circuit (25) is located upstream of said ozonizer (27) in flow direction.

5. The installation according to claim 3 or 4, **characterized in that** said backwashing line (34) is connected to a free discharge (23).

6. The installation according to at least one of claims 3 to 5, **characterized in that** said backwashing line (34) has a self-cleaning superfine filter (24).

7. The installation according to at least one of claims 1 to 6, **characterized in that** at least one of said outlets (20a, 20b) of said filter unit (19) includes a pure water discharge (22) coupled to at least one waste water inlet (13) of said reaction container (14).

8. The installation according to at least one of claims 1 to 7, **characterized in that** said inlets (17a, 17b) of said filter unit (19) each have a device for ozone destruction (15).

9. The installation according to at least one of claims 1 to 8, **characterized in that** said inlets (17a, 17b) and said outlets (20a, 20b) of said filter unit (19) each have a valve connected to a control unit (30) such that the flow direction of the water in said filter unit (19) is modifiable.

## Revendications

1. Installation pour la purification d'eau comprenant une unité de filtrage (19), en amont de laquelle est disposée une unité de traitement (5), l'unité de traitement (5) étant adaptée pour la purification préliminaire de l'eau et comprenant un circuit (25) fermé avec un récipient de réaction (14) et un ozoniseur (27), qui est disposé en aval du récipient de réaction (14), et au moins un cavitateur (28), qui est disposé en aval de l'ozoniseur (27),
**caractérisée en ce que**
le récipient de réaction (14) est couplé avec au moins deux arrivées (17a, 17b) de l'unité de filtrage (19) et l'alimentation en eau de l'unité de filtrage (19) peut être commutée entre les arrivées (17a, 17b) de telle sorte que l'unité de filtrage (19) peut être traversée par de l'eau dans des directions différentes, en particulier opposées, une évacuation (20a, 20b) étant attribuée à chacune des arrivées (17a, 17b) de l'unité de filtrage (19).

2. Installation selon la revendication 1, **caractérisée en ce que** les évacuations (20a, 20b) de l'unité de filtrage (19) sont disposées sensiblement en face des arrivées (17a, 17b) de l'unité de filtrage (19).

3. Installation selon la revendication 1 ou 2, **caractérisée en ce qu'**au moins l'une des évacuations (20a, 20b) de l'unité de filtrage (19) comprend une conduite retour de rinçage (34), qui est couplée au circuit (25) fermé de l'unité de traitement (5).

4. Installation selon la revendication 3, **caractérisée en ce que** le couplage de la conduite retour de rinçage (34) avec le circuit (25) fermé est disposé en amont de l'ozoniseur (27) dans le sens d'écoulement.

5. Installation selon la revendication 3 ou 4, **caractérisée en ce que** la conduite retour de rinçage (34) est reliée à une évacuation libre (23).

6. Installation selon au moins l'une quelconque des revendications 3 à 5, **caractérisée en ce que** la conduite retour de rinçage (34) présente un filtre très fin (24) auto-nettoyant.

7. Installation selon au moins l'une quelconque des revendications 1 à 6, **caractérisée en ce qu'**au moins l'une des évacuations (20a, 20b) de l'unité de filtrage (19) comprend une évacuation d'eau pure (22) qui est couplée avec au moins une arrivée d'eau sale (13) du récipient de réaction (14).

8. Installation selon au moins quelconque des revendications 1 à 7, **caractérisée en ce que** les arrivées (17a, 17b) de l'unité de filtrage (19) présentent chacune un dispositif pour la destruction de l'ozone (15).

9. Installation selon au moins l'une quelconque des revendications 1 à 8, **caractérisée en ce que** les arrivées (17a, 17b) et les évacuations (20a, 20b) de l'unité de filtrage (19) présentent chacune une vanne qui est reliée à une unité de commande (30) de telle sorte que le sens d'écoulement de l'eau dans l'unité de filtrage (19) est modifiable.
